(19) Europäisches Patentamt
European Patent Office
Office européen des brevets

(11) EP 0 592 628 B1

(12) EUROPÄISCHE PATENTSCHRIFT

(45) Veröffentlichungstag und Bekanntmachung des Hinweises auf die Patenterteilung:
**23.07.1997 Patentblatt 1997/30**

(21) Anmeldenummer: **93907640.2**

(22) Anmeldetag: **21.04.1993**

(51) Int Cl.6: **G01M 15/00**

(86) Internationale Anmeldenummer:
**PCT/AT93/00067**

(87) Internationale Veröffentlichungsnummer:
**WO 93/22648 (11.11.1993 Gazette 1993/27)**

# (54) VERFAHREN ZUR MOTORLASTMESSUNG

METHOD FOR MONITORING ENGINE TORQUE

PROCEDE PERMETTANT DE CONTROLER LES COUPLES DES MOTEURS

(84) Benannte Vertragsstaaten:
**BE CH DE DK ES FR GB IT LI NL SE**

(30) Priorität: **30.04.1992 AT 895/92**

(43) Veröffentlichungstag der Anmeldung:
**20.04.1994 Patentblatt 1994/16**

(73) Patentinhaber: **AVL List GmbH**
**8020 Graz (AT)**

(72) Erfinder:
- **HARMS, Klaus-Christoph**
  **A-8010 Graz (AT)**
- **KOEGELER, Hans-Michael**
  **A-8010 Graz (AT)**
- **KUNZFELD, Wilhelm**
  **A-8010 Graz (AT)**
- **SCHIFFBÄNKER, Herbert**
  **A-8010 Graz (AT)**

(74) Vertreter: **Pinter, Rudolf, Dipl.-Ing. et al**
**Patentanwälte Klein & Pinter OEG**
**Fasangasse 49**
**1030 Wien (AT)**

(56) Entgegenhaltungen:
**EP-A- 0 153 004** **EP-A- 0 434 665**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 592 628 B1

## Beschreibung

### Technisches Gebiet

Die Erfindung betrifft ein Verfahren zur Überprüfung von Brennkraftmaschinen, insbesonders von mehrzylindrigen Brennkraftmaschinen, wobei fortlaufend Messungen der kurbelwinkelabhängigen Drehwinkelgeschwindigkeit durchgeführt und durch deren Auswertung Naßgrößen für Drehzahl und Drehmoment bzw. Last bestimmt werden. Weiters betrifft die Erfindung auch eine Einrichtung zur Überprüfung von Brennkraftmaschinen, mit einer Meßeinrichtung zur Bestimmung der kurbelwinkelabhängigen Drehwinkelgeschwindigkeit und einer damit in Verbindung stehenden Auswerteeinheit zur Ermittlung von Maßgrößen für Drehzahl und Drehmoment bzw. Last.

### Stand der Technik

Drehmoment ("Last") und Drehzahl stellen fundamentale Meßgrößen beim Betrieb von Verbrennungskraftmaschinen dar. Die meisten anderen Größen, die an Motoren gemessen werden, zeigen Abhängigkeiten sowohl von der Motorlast als auch von der Motordrehzahl. Diese Zusammenhänge werden in der Motorenforschung üblicherweise in Kennfeldern dargestellt. Auch in Motormanagementsystemen werden z.B. Zündzeitpunkte in Abhängigkeit von Drehzahl und Last einprogrammiert. Bei Motorüberwachungsaufgaben wird heute dagegen (des technischen und finanziellem Aufwands wegen) zumeist auf eine Lastmessung verzichtet und nur absolute Grenzwerte, zum Beispiel für Öldruck, Kühlwassertemperatur oder Auspufftemperaturen, werden überwacht.

Während sich die Motordrehzahl auf viele verschiedene Arten stets einfach messen läßt, stellt die Messung des vom Motor abgegebene Drehmoments einen ungleich höheren Aufwand dar. Häufig werden Dehnmeßstreifen auf spezifisch hoch belasteten Wellenstücken angebracht um die Verformungen in Folge der Torsion zu erfassen. Diese Methode stellt einen direkten Eingriff in den Antriebsstrang dar, weist aber eine hohe Genauigkeit auf. Weiters werden auch Differenzwinkelmessungen über weiche Antriebsstrangelemente durchgeführt. Auch das Reaktionsdrehmoment in den Motoraufhängungen wurde zur Drehmomentbestimmung herangezogen.

Alle diese Methoden sind mit hohem Aufwand an Meßgeräten und Sensoren verbunden. Daher gab es auch bereits Versuche, Lastmaße aus der relativ einfach zu messenden Drehzahl, das ist die mittlere Winkelgeschwindigkeit, und der mittleren Winkelbeschleunigung zu gewinnen. Z.B. in der US-PS 3 921 446 (Karl Ludloff) wird das Lastmoment durch Kombination einer Beschleunigungs- und einer Auslaufphase durch eine bestimmte Winkelgeschwindigkeit abgeschätzt.

Weiters ist es bekannt, daß grundsätzlich auch aus dem Verlauf der momentanen Winkelbeschleunigung der Kurbelwelle ein mittleres Lastmoment einer Kolbenmaschine bestimmt werden kann. So stellt Harry J. Venema im US Patent 455 0 595 für den 4-Zylinder 4-Taktmotor fest, daß sich die Motorlast nur dann aus dem Winkelgeschwindigkeits- und dem Winkelbeschleunigungsverlauf der Kurbelwelle rekonstruieren läßt, wenn auch die Massenkraftwirkung der oszillierenden Massen in der Auswertung berücksichtigt wird. In der Patentschrift wird dann speziell für den 4-Zylinder 4-Taktmotor ein Näherungsformelapparat angegeben.

Die fehlende Berücksichtigung der Massenkräfte beschränkt auch die Anwendbarkeit der Methode von S.J. Citron, EP 0198137. Das dort angegebene Lastmaß entspricht einer Amplitude des Winkelgeschwindigkeitsverlaufes und weist eine unzweckmäßig starke Drehzahlabhängigkeit auf. Darüber hinaus wurde in Versuchen festgestellt, daß die Amplitude des Winkelgeschwindigkeitsverlaufes bei hohen Drehzahlen mit steigender Last auch abnehmen kann und also keinen monotonen Verlauf besitzt. Ein monotoner Zusammenhang ist aber Voraussetzung für die Brauchbarkeit einer Meßgröße.

Im SAE-Paper 8900885 stellen W.B. Ribbens und G. Rizzoni ein elektrisches Ersatzmodell vor, mit dem es möglich ist, das mittlere innere Motordrehmoment aus dem gemessenen Winkelgeschwindigkeitsverlauf und Winkelbeschleunigungsverlauf zu rekonstruieren. Dieses mittlere innere Motordrehmoment unterscheidet sich nur durch die Motorreibung vom Lastmoment. Nachteilig bei dieser Methode ist die hohe Zahl an benötigten Modellparametern, der große Rechenaufwand und die Tatsache, daß der Einfluß von Kurbelwellentorsionsschwingungen nicht berücksichtigt werden kann.

### Darstellung der Erfindung

Aufgabe der Erfindung ist es, die angesprochenen Nachteile der bekannten Verfahren und Einrichtungen der genannten Art zu vermeiden und insbesonders eine Möglichkeit zu schaffen, die Motorlast auf einfache Art und mit wenigen Motordaten zu bestimmen.

Dies wird gemäß der Erfindung bei einem Verfahren der genannten Art dadurch erreicht, daß als Maßgröße für Drehmoment bzw. Last die Schwankungen in dem aus dem Verlauf der Drehwinkelgeschwindigkeit ermittelbaren Energiepegelverlauf herangezogen werden. Die entsprechende Ausgestaltung der erfindungsgemäßen Einrichtung ist dadurch gekennzeichnet, daß die Auswerteeinheit eine Einrichtung zur Ermittlung des Energiepegelverlaufes sowie eine damit verbundene Einrichtung zur Bestimmung von Schwankungen im Energiepegelverlauf und Zuordnung dieser zu den gesuchten Maßgrößen für Drehmoment bzw. Last umfaßt.

Damit ist es also möglich, alleine aus der Messung der momentanen Kurbelwellen-Drehwinkelgeschwindigkeit - sogar ohne Bestimmung der Winkelbeschleunigung - als Funktion des Kurbelwinkels selbst, die Motordrehzahl und die Motorlast, bzw. auch verschiedene weitere Motorüberwachungskenngrößen, auf einfache Art zu bestimmen.

Bezüglich des Begriffes "Energiepegel" bzw. "Energiepegelverlauf", die im folgenden noch näher erläutert sind, wird hier vorweg zusätzlich auch auf die AT-B 393.324 verwiesen, wo die Grundlagen für diese Größen bzw. deren Ermittlung explizit dargelegt sind.

## Kurze Beschreibung der Zeichnungen

Fig. 1 zeigt eine typische Meßanordnung. Am Schwungrad des Motors wird die momentane Drehwinkelgeschwindigkeit $\omega_1$ gemessen. Eine Triggergröße T, die einen Zeitpunkt im Verlauf von $\omega_1$ einer bestimmten Kurbelwellenposition zuordnet, kann z.B. ebenfalls am Schwungrad abgegriffen werden. Optional können weitere Drehwinkelgeschwindigkeiten gemessen werden, z.b. $\omega_2$ und $\omega_3$ um auch Drehschwingungen der Kurbelwelle berücksichtigen zu können.

Bei Kenntnis von Last und Drehzahl können dann beispielsweise in einem Motorüberwachungsgerät alle weiteren Motormeßgrößen in einem Kennfeld betrachtet werden.

Es ist somit möglich, nicht nur einzelne Grenzwerte mit notwendigerweise großem Toleranzbereich für die Trennung von Gut- und Schlechtzuständen anzugeben sondern auch "Grenzwertflächen" (siehe Fig. 2). Das bedeutet, daß man die verschiedenen Überwachungsmeßgrößen, wie z.B. Meßgrößen, Ladedruck, Auspufftemperaturen, Öldruck; Kenngrößen aus dem Öldruckverlauf, Kühlwassertemperatur, Einspritz- bzw. Zündzeitpunkt, Rauchwert oder Betriebsstunden; bzw. auch Kenngrößen, die sich ebenfalls aus dem gemessenen $\omega$-Verlauf bestimmen lassen, und vieles mehr, in wesentlich engeren Toleranzgrenzen überwachen kann als bei Angabe von jeweils einem oberen und unteren Grenzwert für den gesamten Betriebsbereich. Kurz: Der Einfluß eines Motorschadens auf eine bestimmte Meßgröße kann von jenem des Betriebszustandes getrennt werden. Natürlich ergibt sich aus der Kenntnis von Drehzahl und Last auch die Möglichkeit der Leistungsbestimmung, und zwar nicht nur für eine Beschleunigungs- oder Auslaufphase, sondern auch im stationären Zustand.

Zur Bestimmung der momentanen Kurbelwellen-Drehwinkelgeschwindigkeit wird die Kurbelwellenlage $\alpha$ als Funktion der Zeit t an mindestens einem Bauteil des Antriebsstranges gemessen und daraus die Winkelgeschwindigkeit $\omega$ in ihrer Abhängigkeit von $\alpha$ berechnet:

$$\omega(\alpha) = \frac{\Delta\alpha}{\Delta t(\alpha)} \qquad \text{(Gleichung 1)}$$

Zur Erzeugung der Winkelmarkensignale werden entweder vorhandene Marken - wie z.B. die Zähne des Zahnkranzes - in geeigneter Form abgetastet und verarbeitet und/oder andere wohlbekannte inkrementale Meßverfahren eingesetzt. $\Delta\alpha$ liegt dabei - je nach Anzahl der verfügbaren Marken - typischerweise zwischen 1° und 6° Kurbelwinkel. Eine gesonderte Triggermarke - vorzugsweise 1* pro Zyklus - erlaubt eine exakte Winkelzuordnung des Winkelgeschwindigkeitsverlaufes. Es sind viele Möglichkeiten wohl bekannt, um diese Triggerinformation zu erhalten: So können zum Beispiel eine exakt umdrehungssynchrone Marke am Schwungrad und ein weiteres Signal kombiniert werden, das im exakten Winkelbezug zwar etwas variiert aber eine Zylinderzuordnung für den 4-Taktmotor ermöglicht, z.B. ein Zündspannungssignal oder ein Einspritzleitungsdrucksignal. Für den 2-Taktmotor kann letzteres Signal entfallen.

Fig. 3 zeigt in einer Übersicht das gegenständliche Meßverfahren. Im ersten Schritt werden die Meßgröße $\omega_1$ mit dem zugehörigen Triggersignal T ebenso wie die optional bestimmten Meßgrößen $\omega_2$ und $\omega_3$ von höherfrequenten Meßfehlern in Folge der Ungenauigkeiten von $\Delta\alpha$ bzw. $\Delta t$ befreit. Dazu wird die Winkelgeschwindigkeit vorzugsweise mit einer gleitenden Mittelwertbildung geglättet. Weiters wird es zweckmäßig sein, den $\omega$-Verlauf unabhängig von der Markenanzahl mit einer Winkelauflösung von beispielsweise 720/1024 Grad Kurbelwinkel zu berechnen, sodaß pro Zyklus eine Stützpunkteanzahl in einer Potenz von 2 zur Verfügung steht. Das kann durch eine Interpolation des geglätteten Verlaufes geschehen und hat den Vorteil, daß in einem späteren Schritt die schnellen und einfachen FFT-Algorithmen angewendet werden können.

In den nächsten Schritten erfolgt das im folgenden beschriebene Verfahren zur Berechnung des Energiepegels und seines Ordnungsspektrums, aus dem die Ergebnisgröße "Motorlast" und optional auch Ergebnisgrößen für die Gleichmäßigkeit der Einzelzylinderlasten "Rundlauf" gewonnen werden.

Die Ergebnisgröße "Drehzahl" wird in bekannter Art z.B. aus dem Triggersignal T gewonnen. Kann die Kurbelwelle - z.B. auf Grund ihrer kurzen Länge - als starr betrachtet werden, so erfolgt nur eine Winkelgeschwindigkeitsmessung, vorzugsweise am Zahnkranz. Fig. 4 zeigt einen typischen Verlauf der Meßgröße $\omega_1$ in Abhängigkeit vom Kurbelwinkel.

Bei langen Kurbelwellen erfolgt eine weitere Winkelgeschwindigkeitsmessung am freien Kurbelwellenende.

Grundsätzlich - aber nicht notwendigerweise - kann die Genauigkeit der Methode durch die Modellierung des Antriebsstranges in mehrere starre Massen und dazwischenliegende masselose Federn gesteigert werden. In diesem Fall müßten die Winkelgeschwindigkeiten aller "starren Modellmassen" gemessen werden (siehe z.B. Fig. 6), sodaß sich nach Gleichung (1), je nach Anzahl der Meßstellen "n", $\omega_1$ bis $\omega_n$ Hinkelgeschwindigkeitsverläufe ergeben, die alle als Funktion des Hauptkurbelwinkels ($\alpha=\alpha_1$) berechnet und geglättet werden.

Aus den so gemessenen Kurbelwellen-Drehwinkelgeschwindigkeiten $\omega_j$ wird - so wie im österreichischen Patent Nr. 393.324 beschrieben - der Verlauf der im Maschinensystem gespeicherten Energie bestimmt.

$$Eges(\alpha) = I_1(\alpha) \bullet \frac{\omega_1{}^2(\alpha)}{2} + \sum_{j=2}^{n} I_j \frac{\omega_j{}^2(\alpha)}{2} + Epot \qquad \text{(Gleichung 2)}$$

Eges ($\alpha$) im Maschinensystem gespeicherte Energie

$I_1$ ($\alpha$) Trägheitsmoment Trägheitsmoment zur Meßstelle 1, in das die Trägheitswirkung der oszillierenden Massen eingerechnet wurde:

$$I_1(\alpha) = I_{01} \bullet \left(1 + \frac{m_{0s} \bullet r^2}{I_{01}} \bullet \sum_{j=1}^{z} (x'(\alpha_j))^2\right) \qquad \text{(Gleichung 3)}$$

$I_{01}$ Trägheitsmoment der rotierenden Massen an der Meßstelle 1

$m_{OS}$ gesamte oszillierende Masse in einem Zylinder

r halber Hub

z Zylinderanzahl

$\alpha_j$ zylinderspezifischer Kurbelwinkel, der im Zünd-OT des Zylinders "j" null ist

$$x'(\alpha) = \frac{dx}{d\alpha} = \sin\alpha + \frac{\lambda \sin 2\alpha}{2\sqrt{1-\lambda^2\sin^2\alpha}} \qquad \text{(Gleichung 4)}$$

x ($\alpha_j$) dimensionsloser Hub des Zylinders j

$\lambda$ Schubstangenverhältnis ($\lambda=\frac{r}{l}$)

l Pleullänge

$I_j$ Trägheitsmoment zur Meßstelle j

Epot Summe aller potentiellen Energien, die im Antriebsstrangsystem gespeichert sind. Auf ihre Bestimmung wird hier nicht näher eingegangen, da sie für die Lasterkennung vernachlässigt werden können.

Fig. 5 zeigt den aus der Meßgröße $\omega_1$ berechneten Energiepegelverlauf, und Fig. 7 zeigt die durch Berücksichtigung von $\omega_2$ und $\omega_3$ in gesteigerter Genauigkeit erhaltenen Energiepegelverläufe.

Ein wesentliches Element dieser Erfindung ist es nun, daß die Schwankungen in diesem Verlauf der gespeicherten Energie, die grundsätzlich in der Zündfrequenz stark ausgeprägt sind, ein Maß für die Motorlast darstellen. Die Erklärung für diese zunächst nicht offensichtliche Tatsache ist folgende: Bei hoher Motorlast weist das Einzelzylinderdrehmoment in Folge der Gaskräfte höhere Schwankungen auf als bei niedriger Last (siehe Fig. 8). Durch die größere Luftmenge (Turbolader) ergibt sich einerseits ein stärker negatives Kompressionsdrehmoment. Die größere eingespritzte Kraftstoffmenge ergibt andererseits ein stärker positives Expansionsdrehmoment.

Diese Drehmomentschwankungen führen daher auch in der Antriebsstrangdrehung zu mehr oder weniger großen Ungleichförmigkeiten. Die Periodendauer deckt sich dabei mit dem Zündabstand. Allerdings ist der Einfluß der Massenkräfte und jener der Torsionsschwingungen im Antriebsstrang der Schwungradbewegung störend überlagert. Eben diese störenden Einflüsse werden bei der Berechnung des Energiepegelverlaufes - je nach Anzahl der $\omega$-Meßstellen auch die Torsionsschwingungseinflüsse - praktisch beliebig genau berücksichtigt.

Aus den Gleichungen (2) bis (4) erkennt man ein weiteres Element dieser Erfindung, nämlich die geringere Anzahl der für die korrekte Erfassung des Massenkrafteinflusses erforderlichen Motordaten. Diese Anzahl kann darüber hinaus reduziert werden, wenn man folgende Vereinfachungsmöglichkeit berücksichtigt: Da auf jeden Fall eine Zuordnung der Zündfrequenzamplituden zu den zugehörigen Lastmomenten erforderlich ist - zumindest bei einer Drehzahl, z.B. im Leerlauf die Leerlast-Amplitude zum Drehmoment 0 Nm, oder bei Vollast die Vollast-Amplitude zum Nenndrehmoment -, ist es nicht notwendig den Energiepegelverlauf als absolute Größe zu berechnen. Es genügt eine relative Berechnung, bei der Eges auf $I_{01}$ = 1 $kgm^2$ normiert wird. Zur Berücksichtigung der Massenkräfte genügen die Verhältnisgrößen $m_{OS} \bullet r^2 / I_{01}$ und $\lambda$ und zur Berücksichtigung der Torsionsschwingungen kann das Trägheitsmoment der Meßstelle j durch den Verhältnisausdruck $I_j/I_{01}$ ersetzt werden.

Die gesuchte mittlere Zündfrequenzamplitude $A(n_z)$ kann am einfachsten durch eine Ordnungsanalyse mit Hilfe eines FFT-Algorithmus bestimmt werden. Dabei ist es von Vorteil, daß bei der Glättung der -Verläufe eine Interpolation durchgeführt wurde, sodaß die Zahl der Stützpunkte eine Potenz von 2 ist.

$$A(n) = \frac{2}{\sqrt{N}} \sqrt{Xnr^2 + Xni^2} \qquad \text{(Gleichung 5)}$$

N Anzahl der Winkelstützpunkte pro Zyklus
n Ordnung zur Grundfrequenz (n=1 ..... $\frac{N}{2}$)

$$Xn = \frac{1}{\sqrt{N}} \bullet \sum_{\alpha=0}^{(N-1)} E(\alpha) \bullet e^{-i 2 \pi \alpha \bullet n / N}$$

Xnr Realteil von Xn
Xni Immaginärteil von Xn

Je nach Zylinderanzahl z und Taktzahl t ergibt sich die Ordnung $n_z$ der Zündfrequenz zu

$$n_z = \frac{z \bullet 2}{t} \qquad \text{(Gleichung 7)}$$

Bei ungleichen Zündabständen (z.B. für V6-Zylinder Motor: $a_1$ = 150 Grad, $a_2$ = 90 Grad) ist unter "Zündfrequenzamplitude" grundsätzlich die Summe der Amplituden zu den folgenden Kurbelwellenordnungen zu verstehen:

$$n_{z1} = \frac{360}{a_1} \qquad \text{(Gleichung 8)}$$

$$n_{z2} = \frac{360}{a_2} \qquad \text{(Gleichung 9)}$$

und

$$n_{z1_2} = \frac{360}{a_1 + a_2} \qquad \text{(Gleichung 10)}$$

Dabei wird gegebenenfalls auf die nächstgelegene Kurbelwellenordnung gerundet.

Es kann im Einzelfall auch eine Amplitude weggelassen oder durch die Amplitude zur Kurbelwellenordnung eines ganzzahligen Vielfachen zur $n_{z1}$ oder $n_{z2}$ ersetzt werden.

Figur 9 zeigt nun ein Beispiel für eine derartige Ordnungsanalyse eines Energiepegelverlaufes für einen 6-Zylinderreihenmotor.

Die Figuren 10 und 11 zeigen die Abhängigkeiten der Amplitude zur Zündfrequenz (z.B. zur 3ten Kurbelwellenordnung für den 6-Zylindermotor, siehe Fig. 9) von der unabhängig davon gemessenen Last. Man sieht, daß sich monoton steigende Verläufe für alle Drehzahlen ergeben, und zwar schon dann, wenn bei Messung eines einzigen $\omega$-Verlaufes nur der Massenkrafteinfluß kompensiert wird (Fig. 10).

Wird durch eine zweite Winkelgeschwindigkeitsmessung z.B. am freien Kurbelwellenende ein wesentlicher Anteil der Torsionsschwingungen ebenfalls kompensiert, so zeigt sich erwartungsgemäß ein einziger von der Drehzahl praktisch unabhängiger, fast linearer Zusammenhang zwischen der Motorlast und der Zündfrequenzamplitude des Energiepegelverlaufes (Fig. 11).

Man sieht, daß die Amplitude zur Zündfrequenz bereits bei Messung von nur einem Winkelgeschwindigkeitsverlauf ein Maß für die Last darstellt. Durch Messung zusätzlicher Winkelgeschwindigkeitsverläufe kann der Verlauf der im Maschinenstrang gespeicherten Energie genauer erfaßt und damit der prinzipiell drehzahlunabhängige Zusammenhang zur Last besser angenähert werden.

Dieser Zusammenhang kann noch an einem Motor pro Motortyp zur Last kalibriert werden. Dann läßt sich an Hand der gemessenen Energiepegelschwankungen das aktuelle Motorlastmoment als absolute Größe angeben.

Die Kalibrierung erfolgt auf einem Prüfstand, an dem eine Lastreferenzmessung möglich ist. Sie ist bei bekanntem Motorträgheitsmoment ($I_0$) aber ebenso in einigen freien Hochläufen eines im Fahrzeug eingebauten Motors in der Werkstätte möglich.

Dabei kann das effektive Motordrehmoment (M) bekanntermaßen auch mit

$$M = I_0 \bullet \langle\dot{\omega}\rangle \qquad \text{(Gleichung 11)}$$

bestimmt werden.

Dabei wird unter $\langle\dot{\omega}\rangle$ die meßbare mittlere Drehbeschleunigung z.B. während eines Arbeitsspiels verstanden und unter $I_0$ das gesamte wirksame Motorträgheitsmoment.

Dieses derart bestimmte Motordrehmoment (M) läßt sich gemäß der hier vorgestellten Erfindung aber auch aus der gleichzeitig berechenbaren Zündfrequenzamplitude des Energiepegelverlaufes bestimmen.

$$M = d + k \bullet A(n_z) \qquad \text{(Gleichung 12)}$$

Setzt man Gleichung 11 und Gleichung 12 an mindestens zwei Lastpunkten gleich, also z.B. für ein Arbeitsspiel aus einem Vollasthochlauf und in einem weiteren Arbeitsspiel etwa gleicher Drehzahl aus einem Teillasthochlauf, so lassen sich die Kalibrierfaktoren d und k für diesen Motortyp (bei dieser Drehzahl) bestimmen.

Bei der Anwendung der FFT zur Berechnung von $A(n_z)$ ist es günstig, wenn der durch $\langle\dot{\omega}\rangle$ bedingte nichtperiodische Anteil von allen gemessenen ω-Verläufen, die zur Energiepegelberechnung herangezogen werden. zuvor entfernt wird:

$$\omega_{corr(\alpha)} = \omega_{(\alpha)} - [\omega_{(\alpha 1)} - \omega_{(\alpha 0)}] \frac{\alpha - \alpha_0}{\alpha_1 - \alpha_0} \qquad \text{(Gleichung 13)}$$

Dabei bedeutet:

| | |
|---|---|
| $\omega_{corr}$ | korrigierter ω-Verlauf ohne Hochlaufanteil |
| $\omega_{(\alpha)}$ | ω-Verlauf mit Hochlaufanteil |
| $\alpha$ | aktueller Kurbelwinkel |
| $\alpha_0$ bis $\alpha_1$ | Mittelungsbereich, sinnvollerweise ein Arbeitsspiel |

Zusätzlich kann aus dem Ordnungsspektrum des Energiepegelverlaufes eine generelle Aussage über die Gleichmäßigkeit der einzelnen Zylinderleistungen gewonnen werden (siehe Fig. 3). Läuft der Motor "unrund", so werden alle Amplituden zu Kurbelwellenordnungen unterhalb der Zündfrequenz, beim Viertakter vorzugsweise unterhalb bis einschließlich der halben Zündfrequenz, (also z.B. 0,5te, 1te und 1,5te Kurbelwellenordnung für den 6-Zylindermotor, siehe Fig. 9) erhöht. Grundsätzlich kann daher die Summe dieser Amplituden als Gleichmäßigkeits- bzw. Rundlaufmaß herangezogen werden.

Besonders die 0,5te Kurbelwellenordnung wird bei der Minderleistung eines Zylinders von einem 4-Taktmotor angeregt (bei 2-Taktmotor die erste Kurbelwellenordnung).

Sie kann daher auch alleine als Fehlererkennungsmaß herangezogen werden.

Die Grenzwerte zwischen Gut- und Schlechtzustand können mit Last- und Drehzahl variieren und werden in einer "Selbstlernphase" bei Installation des Gerätes am "Gutmotor-Aufbau" an Hand von statistischen Methoden automatisch festgelegt (siehe Fig. 2).

Die Messung der Drehzahl und der Drehungleichförmigkeit ist also geeignet, diagnostische Aussagen über den Motorzustand zu gewinnen. Das dabei unter Umständen noch benötigte wirksame Trägheitsmoment des Motors ist aber häufig nicht bekannt.

Vorgeschlagen wird daher weiters die Messung der Drehzahl und/oder der Drehungleichförmigkeit nicht nur ohne, sondern auch mit einer kleinen zusätzlichen Belastung. Diese zusätzliche Belastung kann ein zusätzliches bekanntes Trägheitsmoment und/oder ein zusätzliches bekanntes Reibmoment sein. Durch einen rechnerischen Vergleich der Meßresultate mit und ohne zusätzliche Belastung kann das unbekannte Motorträgheitsmoment ermittelt werden.

Dabei mißt man einerseits ohne zusätzliche Belastung den Verlauf $\omega_1$ der Drehzahl und der Drehungleichförmigkeit und macht die Auswertung mit den Parametern

$I_1$ Trägheitsmoment der rotierenden Massen
$M_1$ Wirksames mittleres Moment

und andererseits mißt man mit zusätzlicher Belastung unter sonst gleichen Bedingungen den Verlauf $\omega_2$ und wertet aus mit

$I_2 = I_1 + I_B$ Trägheitsmoment inkl. zusätzlicher Belastung
$M_2 = M_1 - M_B$ Wirksames Moment bei zusätzlicher Belastung

Man erhält so eine Bestimmungsgleichung für $I_1$.

Die im freien Hochlauf und/oder Auslauf bestimmte mittlere Drehzahländerung $<\dot{\omega}>$ kann nach dem Gesetz von Newton in Beziehung zum wirksamen Moment gesetzt werden:

$$M_1 = I_1 \bullet <\dot{\omega}_1>$$

$$M_2 = I_2 \bullet <\dot{\omega}_2>$$

Man erhält so das gesuchte Trägheitsmoment $I_1$:

$$I_1 = (M_B + I_B \bullet <\dot{\omega}_2>)/(<\dot{\omega}_1> - <\dot{\omega}_2>) \quad \text{Gleichung 14}$$

Die Belastungseinrichtung kann dabei z.B. so gestaltet sein, daß sie statt des genormten Werkzeuges zum manuellen Drehen des Schwungrades montiert werden kann. Sie sollte also wie dieses Werkzeug ein Zahnritzel enthalten, das in den Zahnkranz des Schwungrades eingreift und von diesem angetrieben wird. Das Zahnritzel wiederum treibt die Belastungseinrichtung an, die z.B. aus einem Schwungrad und/oder aus einer hydraulischen Bremse bestehen kann. Vorteilhafterweise kann auch eine Kupplung zum wahlweisen Aktivieren der zusätzlichen Belastung vorgesehen sein.

Eine andere Möglichkeit für die Realisierung der zusätzlichen Belastung nutzt den vorhandenen Generator (Lichtmaschine, Alternator), dem wahlweise ein elektrischer Lastwiderstand zugeschaltet wird. Unter Umständen nachteilig dabei sind aber die relativ geringe Leistung des Generators, der nicht überlastet werden darf sowie sein drehzahl- und lastabhängiger Wirkungsgrad.

Aus den genannten Gründen ist der mechanischen Lösung im Normalfall der Vorzug zu geben.

Der Zahnkranzsensor für die Messung der Drehzahl und der Drehungleichförmigkeit könnte auch mit in die Belastungseinrichtung eingebaut werden.

## Patentansprüche

1. Verfahren zur Überprüfung von Brennkraftmaschinen, insbesonders von mehrzylindrigen Brennkraftmaschinen, wobei fortlaufend Messungen der kurbelwinkelabhängigen Drehwinkelgeschwindigkeit durchgeführt und durch deren Auswertung Maßgrößen für Drehzahl und Drehmoment bzw. Last bestimmt werden, **dadurch gekennzeichnet,** daß als Maßgröße für Drehmoment bzw. Last die Schwankungen in dem aus dem Verlauf der Drehwinkelgeschwindigkeit ermittelbaren Energiepegelverlauf herangezogen werden, wobei unter Energiepegelverlauf der näherungsweise Verlauf der gesamten im Maschinensystem gespeicherten mechanischen Energie verstanden wird.

2. Verfahren nach Anspruch 1, dadurch gekennzeichnet, daß die mittlere Schwankungsamplitude des Energiepegelverlaufes bei der Zündfrequenz als Maßgröße für Drehmoment bzw. Last verwendet wird.

3. Verfahren nach Anspruch 1 oder 2, dadurch gekennzeichnet, daß der Verlauf der Drehwinkelgeschwindigkeit bzw. von daraus abgeleiteten Größen vor der Auswertung einer Signalaufbereitung, vorzugsweise einer Mittelung durch Überlagerung der Verläufe aus mehreren Arbeitsspielen oder Zündperioden bzw. einer gleitenden Mittelwertbildung, unterzogen wird.

4. Verfahren nach Anspruch 3, dadurch gekennzeichnet, daß der Verlauf der Drehwinkelgeschwindigkeit bzw. von daraus abgeleiteten Größen mit einer definierten Winkelauflösung, von beispielsweise 720/1024 Grad Kurbelwinkel, ermittelt wird, sodaß pro Zyklus eine Stützpunkteanzahl in einer Potenz von zwei zur Verfügung steht.

5. Verfahren nach einem der Ansprüche 2 bis 4, dadurch gekennzeichnet, daß die mittlere Schwankungsamplitude des Energiepegelverlaufes bei der Zündfrequenz durch eine Ordnungsanalyse mittels eines FFT-Algorithmus bestimmt wird.

6. Verfahren nach Anspruch 5, dadurch gekennzeichnet, daß aus dem Ordnungsspektrum des Energiepegelverlaufes die Amplitudenerhöhungen zu Kurbelwellenordnungen < der Zündfrequenz ermittelt und als Maß für die Gleichmäßigkeit der Einzelzylinderleistungen bzw. für den Rundlauf der Brennkraftmaschine verwendet werden.

7. Verfahren nach einem der Ansprüche 1 bis 6, dadurch gekennzeichnet, daß der Verlauf der kurbelwinkelabhängigen Drehwinkelgeschwindigkeit der jeweiligen Brennkraftmaschine zur Ermittlung des Energiepegelverlaufes einmal ohne und einmal mit zusätzlicher Belastung durch ein zusätzliches bekanntes Trägheitsmoment und/oder Reibmoment bestimmt wird, woraus durch Vergleich der jeweiligen Meßresultate das wirksame Trägheitsmoment ermittelt wird.

8. Verfahren nach Anspruch 7, dadurch gekennzeichnet, daß ein zusätzliches Reibmoment über einen dem an der Brennkraftmaschine vorhandenen Generator zugeschalteten elektrischen Lastwiderstand erzeugt wird.

9. Verfahren nach Anspruch 7, dadurch gekennzeichnet, daß die zusätzliche Belastung über ein von der Brennkraftmaschine angetriebenes zusätzliches Schwungrad und/oder eine Bremseinrichtung aufgebracht wird.

10. Einrichtung zur Überprüfung von Bennkraftmaschinen, mit einer Meßeinrichtung zur Bestimmung der kurbelwinkelabhängigen Drehwinkelgeschwindigkeit und einer damit in Verbindung stehenden Auswerteeinheit zur Ermittlung von Maßgrößen für Drehzahl und Drehmoment bzw. Last, **dadurch gekennzeichnet,** daß die Auswerteeinheit eine Einrichtung zur Ermittlung des Energiepegelverlaufes, sowie eine damit verbundene Einrichtung zur Bestimmung von Schwankungen im Energiepegelverlauf und Zuordnung dieser zu den gesuchten Maßgrößen für Drehmoment bzw. Last umfaßt, wobei unter Energiepegelverlauf der näherungsweise Verlauf der gesamten im Maschinensystem gespeicherten mechanischen Energie verstanden wird.

11. Einrichtung nach Anspruch 10, dadurch gekennzeichnet, daß der Auswerteeinheit eine Signalaufbereitungseinheit vorgeschaltet ist.

12. Einrichtung nach einem der Ansprüche 10 oder 11, dadurch gekennzeichnet, daß ein zusätzlich anzutreibendes Schwungrad mit bekanntem Trägheitsmoment und/oder eine eine definierte Last darstellende Bremseinrichtung für die Brennkraftmaschine vorgesehen sind.

13. Einrichtung nach einem der Ansprüche 10 oder 11, dadurch gekennzeichnet, daß einem an der Brennkraftmaschine vorhandenen Generator ein definierter elektrischer Lastwiderstand zuschaltbar ist.

**Claims**

1. Method of testing internal combustion engines, in particular multicylinder engines, continuous measurements of the crank-angle-dependent angular velocity being performed and by interpreting them measured magnitudes being determined for speed and torque or load, characterised in that as measured magnitudes for torque or load the variations in the energy level behaviour determined from the course of the angular velocity are derived, the phrase energy level behaviour being understood as meaning the approximate course of the overall mechanical energy stored in the engine system.

2. Method according to claim 1, characterised in that the mean amplitude of variation of the course of the energy level at the ignition frequency is used as the measured magnitude for torque or load.

3. Method according to claim 1 or 2, characterised in that the course of the angular velocity or of magnitudes derived from it is undertaken before the interpretation of a signal processing, preferably an averaging by superposition of the courses of several working cycles or ignition periods and the formation of a sliding mean value.

4. Method according to claim 3, characterised in that the course of the angular velocity or of magnitudes derived from it is determined as a defined angular resolution, of for example 720/1024° crank angle, so that per cycle an abutment point number to a power of 2 is available.

5. Method according to one of claims 2 to 4, characterised in that the mean amplitude of variation of the course of the energy level is determined at the ignition frequency by an order analysis by means of a FFT algorithm.

6. Method according to claim 5, characterised in that from the order spectrum of the energy level course the amplitude increases at crankshaft orders less than the ignition frequency are determined and are used as a measure for the uniformity of the performances of the individual cylinders or the evenness of running of the engine.

7. Method according to one of claims 1 to 6, characterised in that the course of the crank-angle-dependent angular velocity of the engine in question is determined in order to derive the course of the energy level on the one hand without and on the other hand with additional loading by an additional known moment of inertia and/or friction torque, from which the effective moment of inertia is determined by comparison of the results of the respective measurements.

8. Method according to claim 7, characterised in that an additional friction torque is generated through an electric load resistance connected to a generator present on the engine.

9. Method according to claim 7, characterised in that the additional loading is applied through an additional flywheel and/or a braking device driven by the engine.

10. Device for testing internal combustion engines with a measuring device for determining the crank-angle-dependent angular velocity and an evaluating device connected to it for determining measured magnitudes for speed and torque or load, characterised in that the evaluating unit includes a device for determining the energy level behaviour as well as a device connected to it for determining variations in the energy level behaviour and for associating this with the measured magnitudes for torque or load, where the phrase energy level behaviour is to be understood as meaning the approximate course of the overall mechanical energy stored in the engine system.

11. Device according to claim 10, characterised in that the evaluating unit has a signal processing unit preceding it.

12. Device according to one of claims 10 or 11, characterised in that an additional driven flywheel having a known moment of inertia and/or a braking device representing a defined load are provided for the engine.

13. Device according to one of claims 10 or 11, characterised in that a defined electrical load resistance can be connected to the generator present on the engine.

**Revendications**

1. Procédé de contrôle de moteurs à combustion interne, en particulier de moteurs à combustion interne à plusieurs cylindres, des mesures de la vitesse angulaire de rotation, en fonction de l'angle de vilebrequin, étant effectuées en continu et, au moyen de leur exploitation. des grandeurs concernant la vitesse de rotation et le couple ou la charge étant déterminées, caractérisé en ce que l'on utilise comme grandeur pour le couple, ou la charge, les oscillations extraites de l'allure du niveau d'énergie susceptibles d'être déterminées à partir de l'allure de la vitesse angulaire de rotation, l'évolution convergente de l'ensemble de l'énergie mécanique stockée dans le système machine étant comprise dans le terme d'évolution de niveau d'énergie.

**2.** Procédé selon la revendication 1, caractérisé en ce que l'amplitude moyenne d'oscillation de l'évolution du niveau d'énergie, à la fréquence d'allumage, est utilisée comme grandeur de mesure du couple ou de la charge.

**3.** Procédé selon la revendication 1 ou la revendication 2, caractérisé en ce que l'allure de la vitesse angulaire de rotation ou des grandeurs qui en sont dérivées est soumis avant évaluation à une préparation du signal, de préférence en formant une moyenne, par superposition des évolutions obtenues à partir de plusieurs cycles de travail ou périodes d'allumage, ou respectivement par formation d'une moyenne glissante.

**4.** Procédé selon la revendication 3 caractérisé en ce que l'allure de la vitesse angulaire de rotation respectivement des grandeurs qui en sont dérivées, est déterminée avec une résolution angulaire définie, qui est de par exemple 720/1024 degrés d'angle de vilebrequin, de manière que l'on puisse disposer par cycles d'un nombre de points d'appui, en une puissance de deux.

**5.** Procédé selon l'une des revendications 2 à 4, caractérisé en ce que l'amplitude moyenne de vibration de l'évolution du niveau d'énergie est déterminée, pour la fréquence d'allumage, par une analyse taxinomique faite au moyen d'un algorithme à transformation de Fourrier rapide (FFT).

**6.** Procédé selon la revendication 5, caractérisé en ce qu'à partir du spectre taxinomique de l'évolution du niveau d'énergie on détermine les augmentations d'amplitude par rapport aux ordres du vilebrequin < à la fréquence d'allumage et qu'on les utilise comme indice de régularité des puissances des cylindres individuels, ou bien comme indice de la marche régulière du moteur à combustion interne.

**7.** Procédé selon l'une des revendications 1 à 6, caractérisé en ce que l'allure de la vitesse angulaire de rotation, fonction de l'angle du vilebrequin, du moteur à combustion interne respectif est déterminé, en vue de déterminer l'évolution du niveau d'énergie, une première fois sans et une autre fois avec une charge supplémentaire provenant d'un couple d'inertie et/ou d'un couple de frottement supplémentaire connu, à partir de quoi l'on détermine le couple d'inertie effectif par comparaison entre les résultats de mesure respectifs.

**8.** Procédé selon la revendication 7, caractérisé en ce qu'un couple de frottement supplémentaire est généré par l'intermédiaire d'une résistance de charge électrique branchée sur le générateur électrique existant sur le moteur à combustion interne.

**9.** Procédé upnselon la revendication 7, caractérisé en ce que la charge supplémentaire est appliquée par l'intermédiaire d'un volant d'inertie supplémentaire et/ou d'un organe de freinage supplémentaire, entraîné par le moteur à combustion interne.

**10.** Dispositif de contrôle de moteurs à combustion interne, équipée d'un organe de mesure destiné à déterminer la vitesse angulaire de rotation en fonction de l'angle de vilebrequin, et d'une unité d'évaluation reliée à celui-ci, en vue de déterminer des grandeurs de mesure concernant la vitesse de rotation et le couple ou la charge, caractérisé en ce que l'unité d'évaluation comprend un organe de détermination de l'évolution du niveau d'énergie, ainsi qu'un organe, lui étant relié pour déterminer les oscillations se produisant dans l'évolution du niveau d'énergie et l'association de celle-ci aux grandeurs de mesure recherchées concernant le couple ou la charge, l'évolution convergente de l'ensemble de l'énergie mécanique stockée dans le système machine étant comprise dans le terme d'évolution de niveau d'énergie.

**11.** Dispositif selon la revendication 10, caractérisé en ce qu'une unité de préparation de signal est branchée en amont de l'unité d'évaluation.

**12.** Dispositif selon l'une des revendications 10 ou 11, caractérisé en ce qu'il comporte un volant d'inertie supplémentaire à entraîner et ayant un couple d'inertie connu et/ou un organe de freinage constituant une charge définie pour le moteur à combustion interne.

**13.** Dispositif selon l'une des revendications 10 ou 11, caractérisé en ce qu'une résistance de charge électrique définie est susceptible d'être branchée sur le générateur électrique existant sur le moteur à combustion.

Fig. 1

Meßanordnung beispielhaft

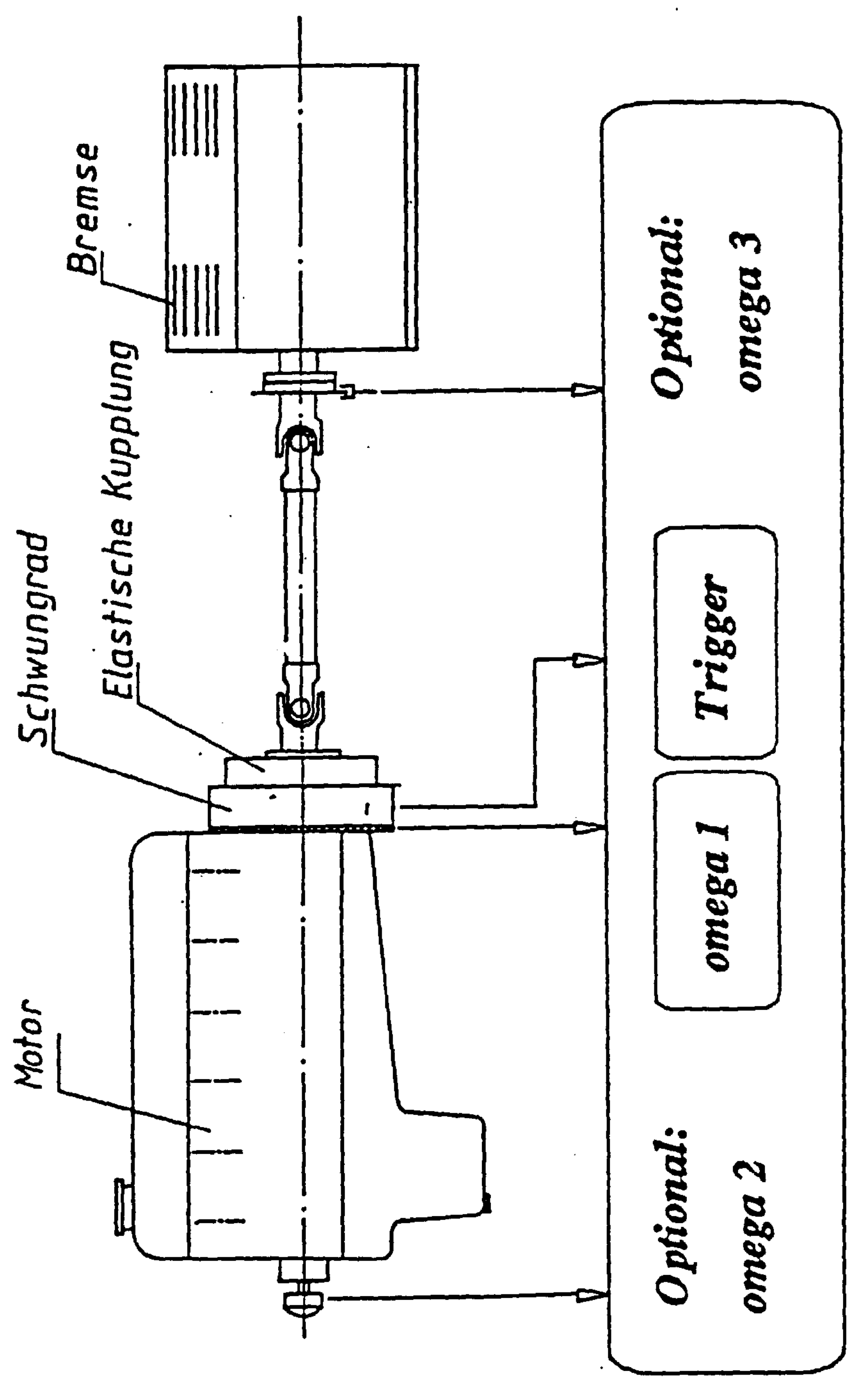

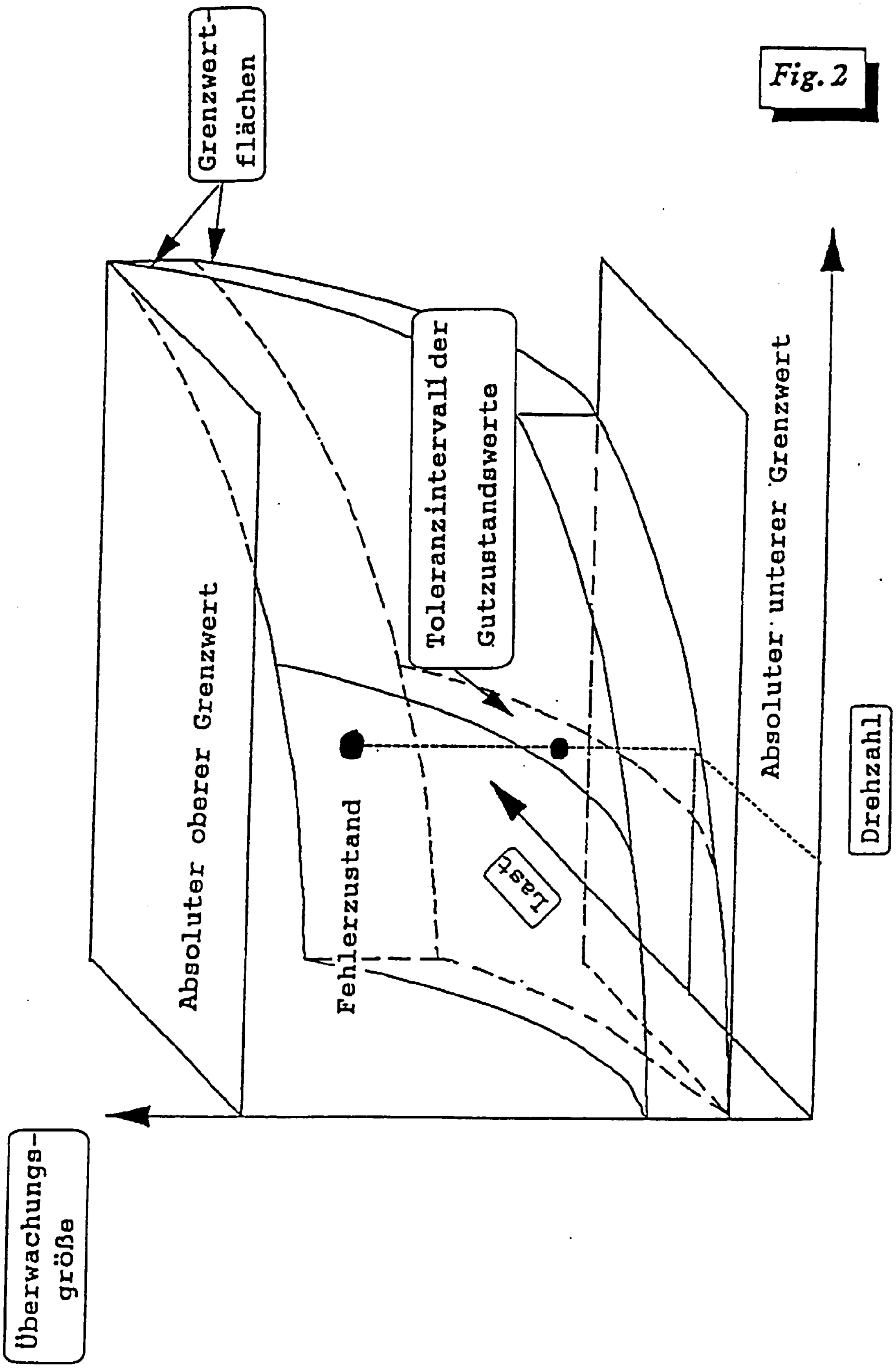
Grenzwert-
flächen
Toleranzintervall der
Gutzustandswerte
Absoluter unterer Grenzwert
Drehzahl
Absoluter oberer Grenzwert
Fehlerzustand
Last
Überwachungs-
größe

Fig. 2

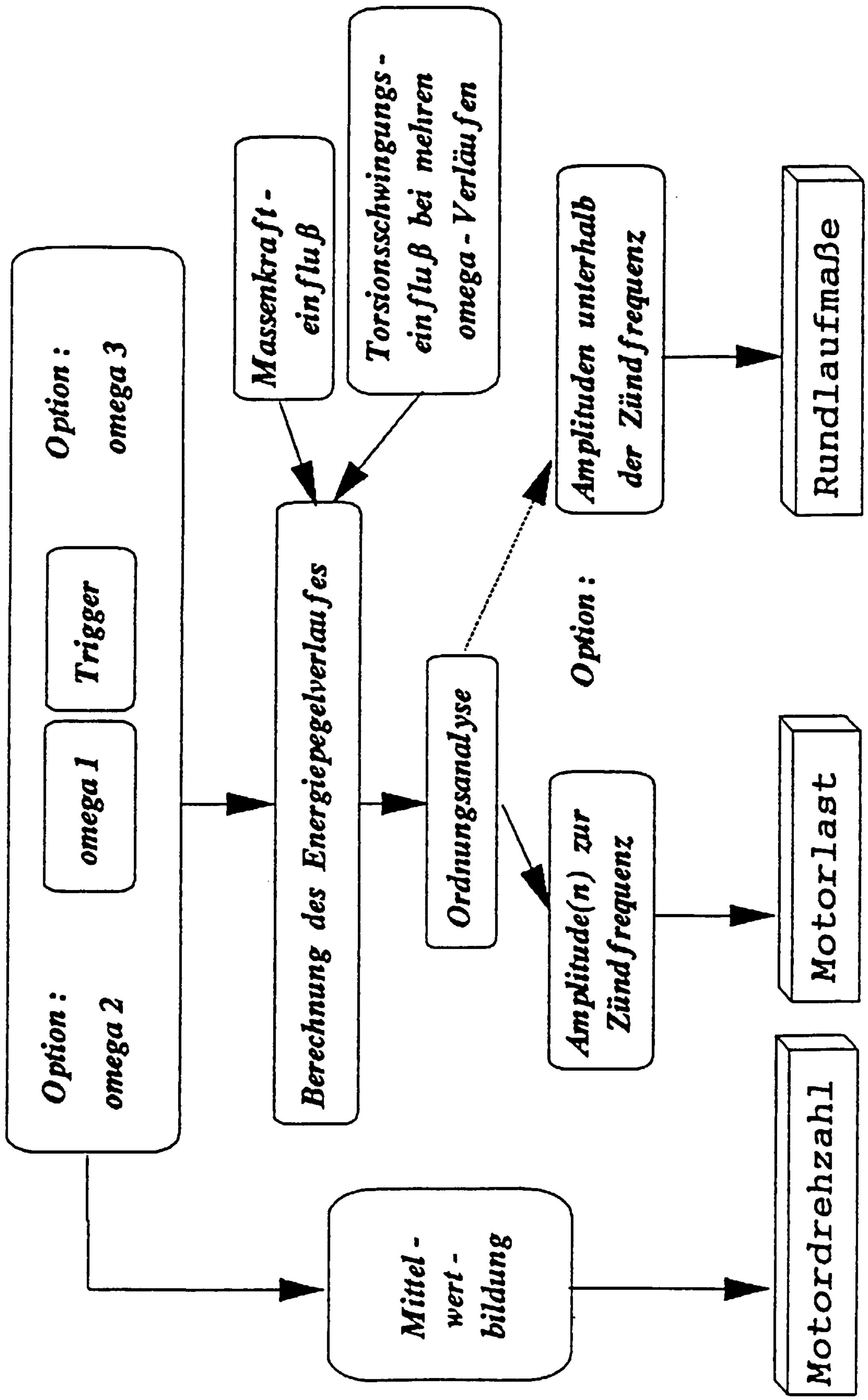
Option :
omega 2
omega 1
Trigger
Option :
omega 3
Massenkraft-
einfluß
Torsionsschwingungs-
einfluß bei mehren
omega-Verläufen
Berechnung des Energiepegelverlaufes
Ordnungsanalyse
Option :
Amplitude(n) zur
Zündfrequenz
Amplituden unterhalb
der Zündfrequenz
Mittel-
wert-
bildung
Motordrehzahl
Motorlast
Rundlaufmaße

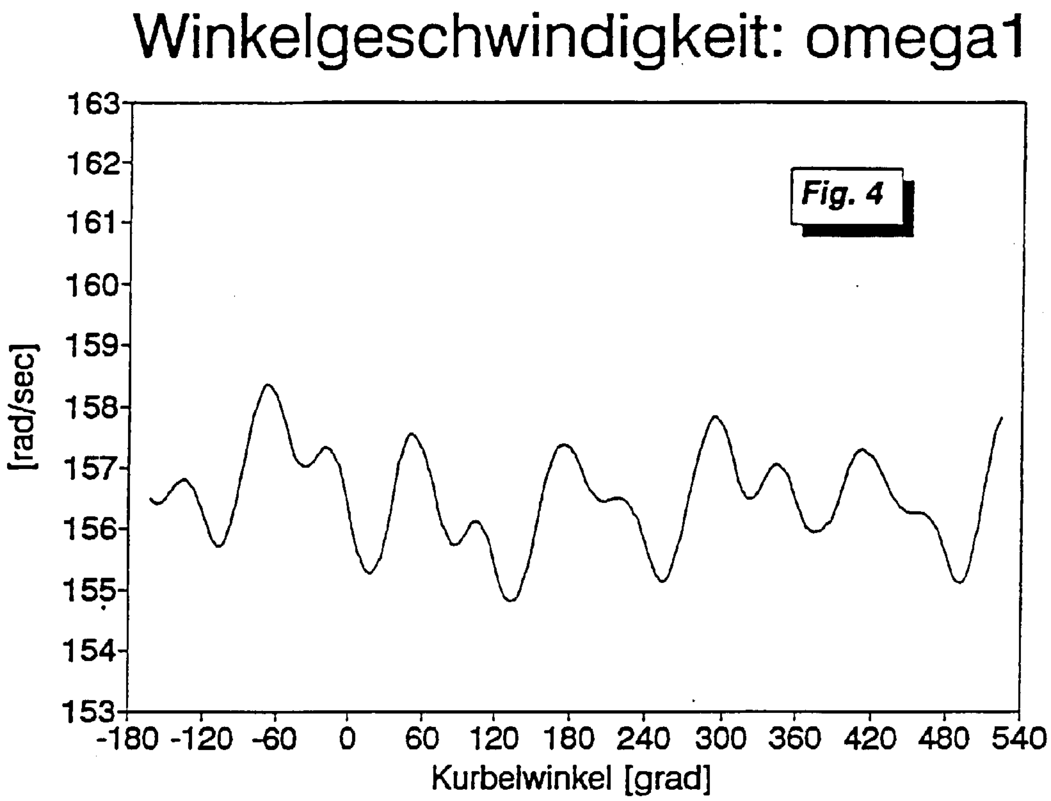
Winkelgeschwindigkeit: omega1
Fig. 4
[rad/sec]
163
162
161
160
159
158
157
156
155
154
153
-180 -120 -60 0 60 120 180 240 300 360 420 480 540
Kurbelwinkel [grad]

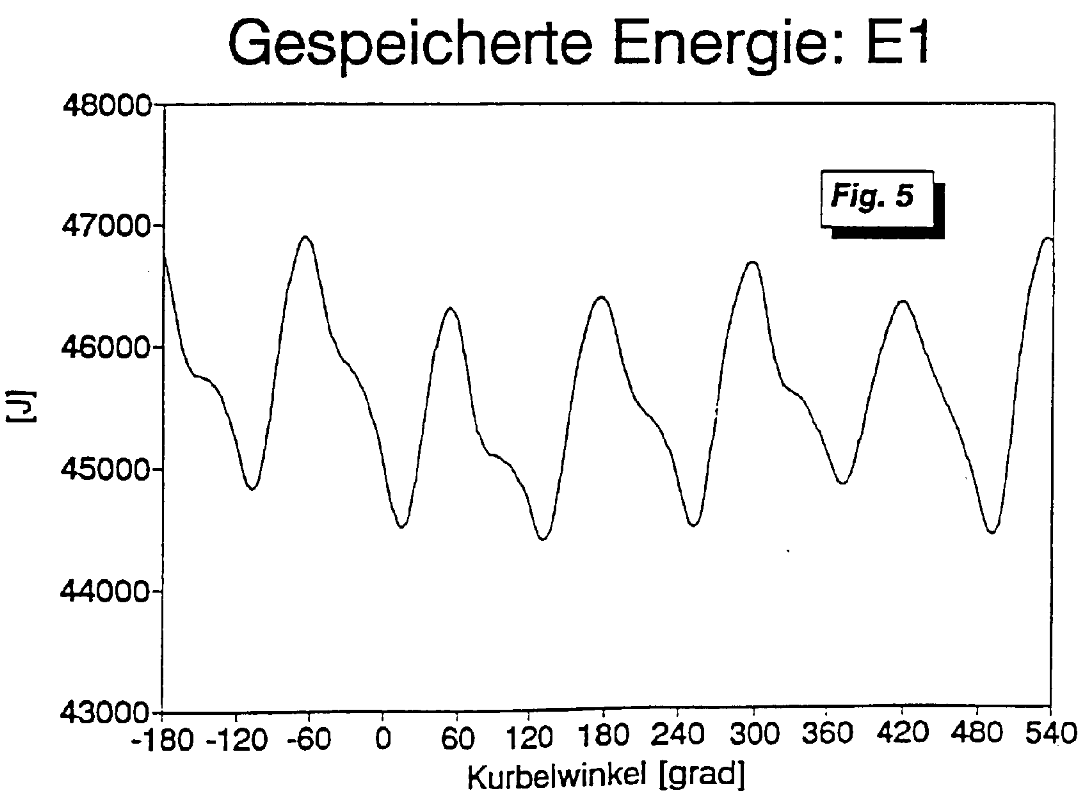
Gespeicherte Energie: E1
Fig. 5
[J]
48000
47000
46000
45000
44000
43000
-180 -120 -60 0 60 120 180 240 300 360 420 480 540
Kurbelwinkel [grad]

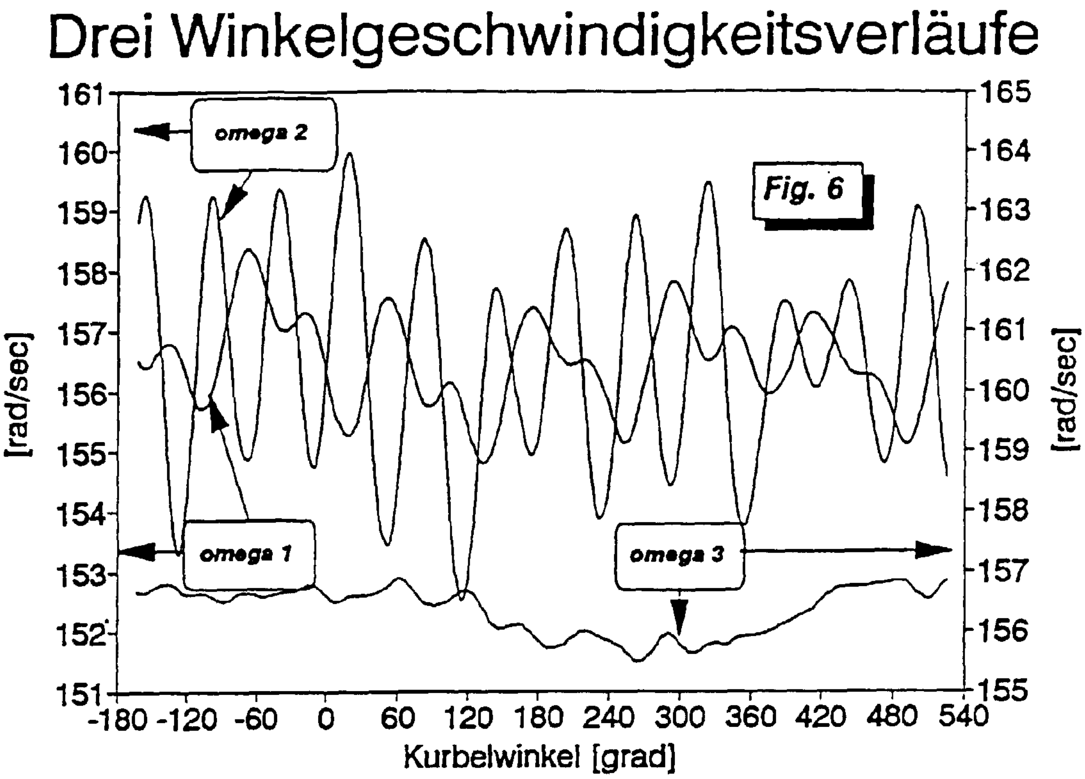
Drei Winkelgeschwindigkeitsverläufe
omega 2
omega 1
omega 3
Fig. 6
[rad/sec]
[rad/sec]
161
160
159
158
157
156
155
154
153
152
151
165
164
163
162
161
160
159
158
157
156
155
-180 -120 -60 0 60 120 180 240 300 360 420 480 540
Kurbelwinkel [grad]

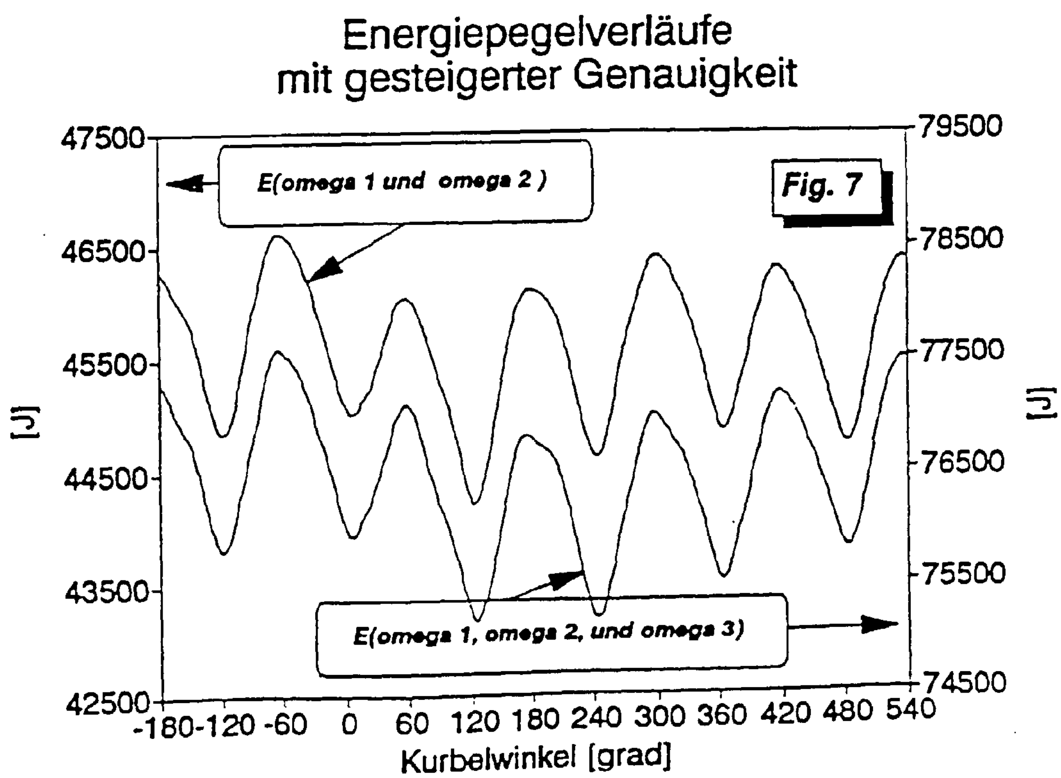
Energiepegelverläufe
mit gesteigerter Genauigkeit
E(omega 1 und omega 2)
E(omega 1, omega 2, und omega 3)
Fig. 7
[J]
[J]
47500
46500
45500
44500
43500
42500
79500
78500
77500
76500
75500
74500
-180 -120 -60 0 60 120 180 240 300 360 420 480 540
Kurbelwinkel [grad]

Fig. 8

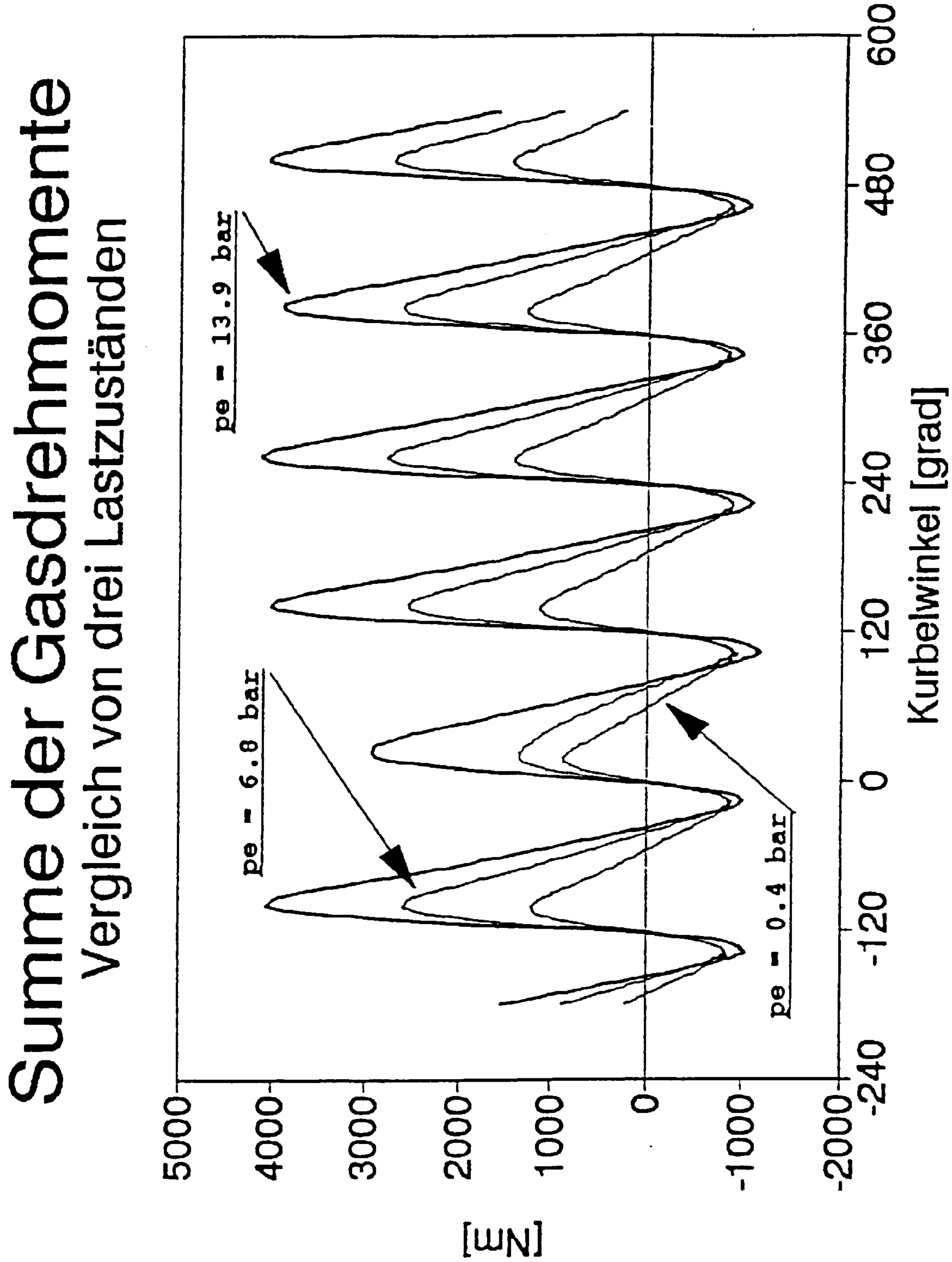
Summe der Gasdrehmomente
Vergleich von drei Lastzuständen
pe = 13.9 bar
pe = 6.8 bar
pe = 0.4 bar
[Nm]
5000
4000
3000
2000
1000
0
-1000
-2000
-240
-120
0
120
240
360
480
600
Kurbelwinkel [grad]

*Fig. 9*

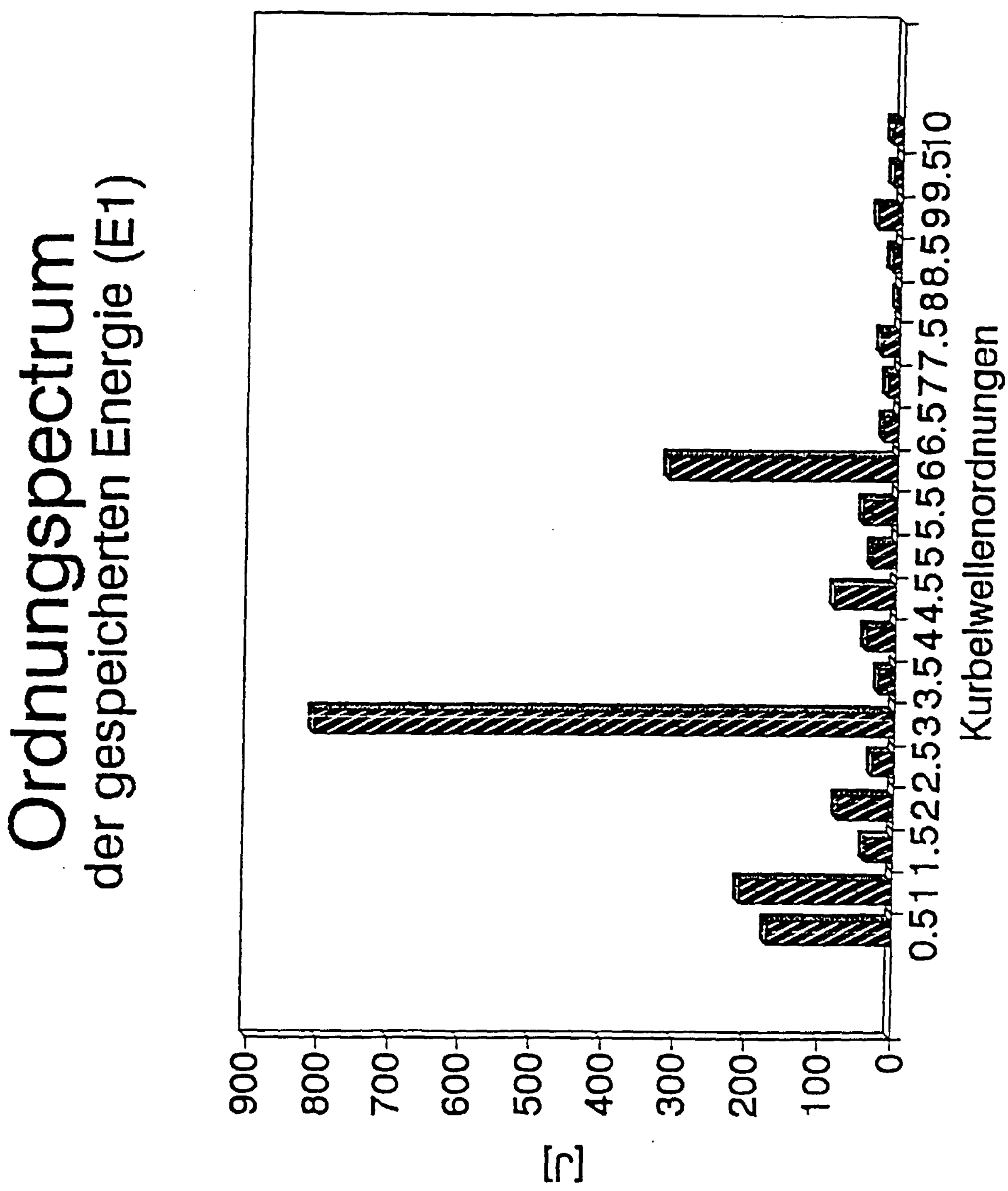
Ordnungspectrum
der gespeicherten Energie (E1)
[J]
0
100
200
300
400
500
600
700
800
900
0.51 1.52 2.53 3.54 4.55 5.56 6.57 7.58 8.59 9.510
Kurbelwellenordnungen

*Fig. 10*

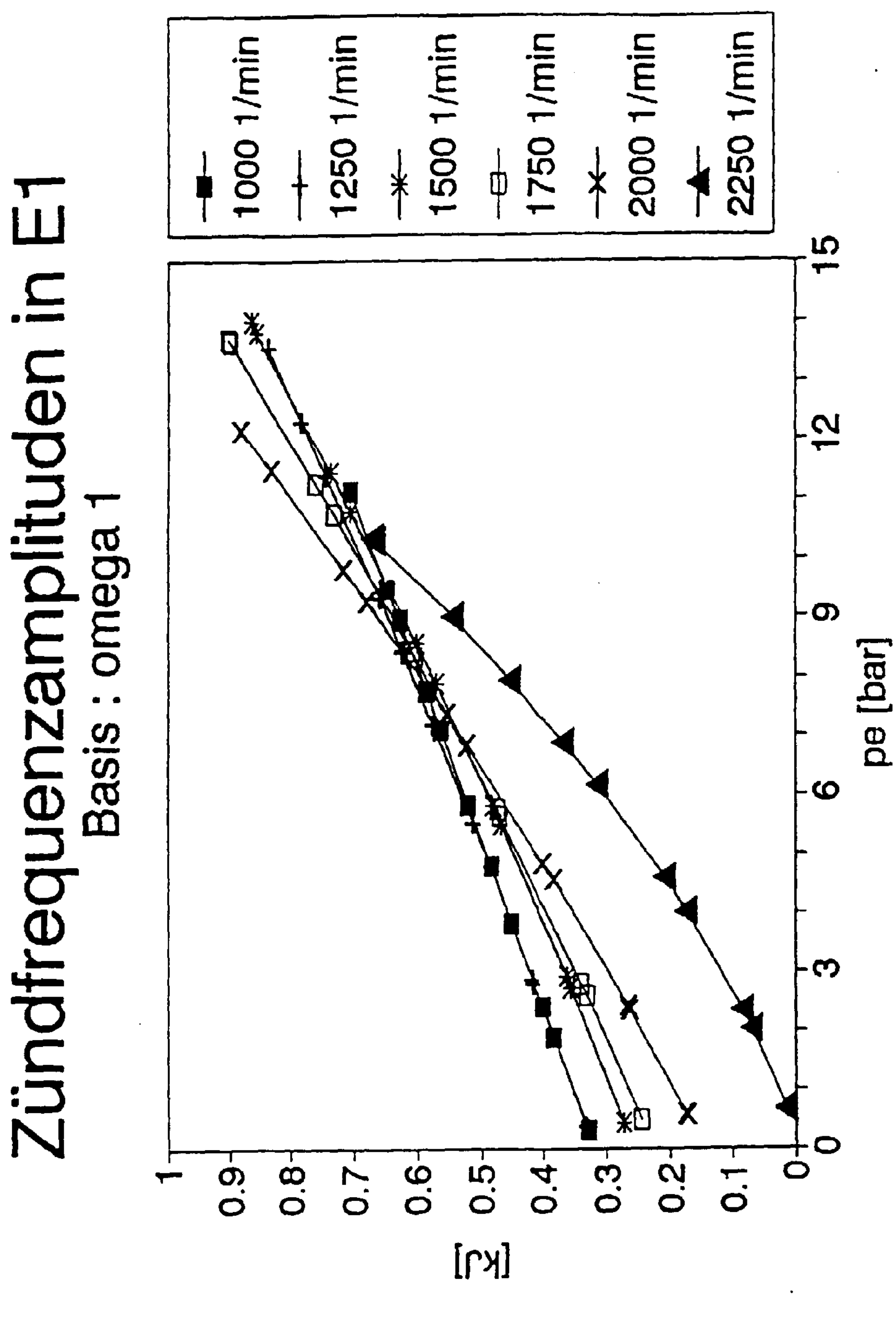
Zündfrequenzamplituden in E1
Basis : omega 1
1000 1/min
1250 1/min
1500 1/min
1750 1/min
2000 1/min
2250 1/min
[kJ]
pe [bar]
0
0.1
0.2
0.3
0.4
0.5
0.6
0.7
0.8
0.9
1
0
3
6
9
12
15

Fig. 11

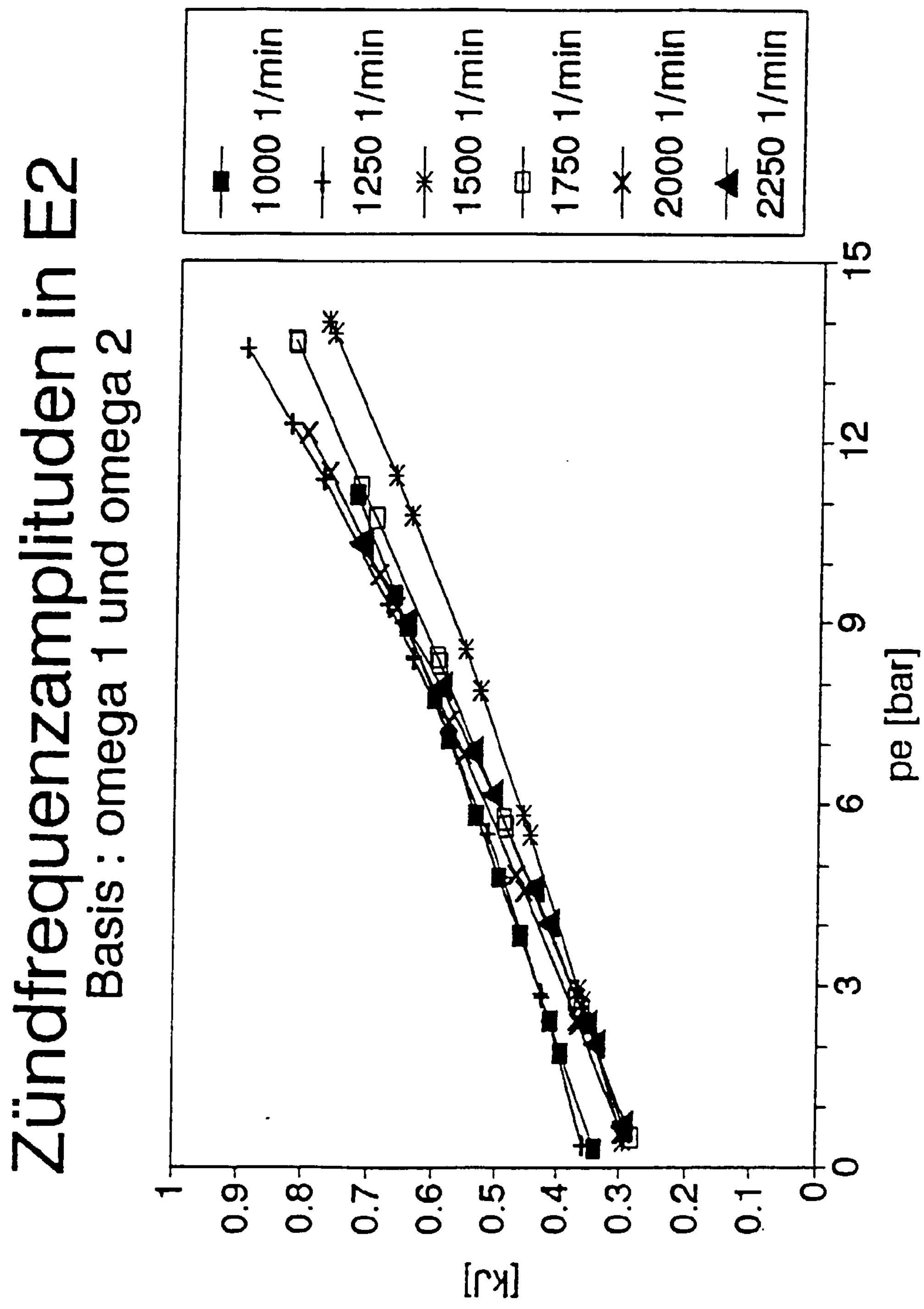
Zündfrequenzamplituden in E2
Basis : omega 1 und omega 2
[kJ]
0
0.1
0.2
0.3
0.4
0.5
0.6
0.7
0.8
0.9
1
0
3
6
9
12
15
pe [bar]
1000 1/min
1250 1/min
1500 1/min
1750 1/min
2000 1/min
2250 1/min